(19) Europäisches Patentamt / European Patent Office / Office européen des brevets

(11) **EP 3 088 934 A1**

(12) **EUROPEAN PATENT APPLICATION**
published in accordance with Art. 153(4) EPC

(43) Date of publication:
02.11.2016 Bulletin 2016/44

(51) Int Cl.:
G02B 27/01 (2006.01)  B60K 35/00 (2006.01)
G03B 35/18 (2006.01)  H04N 5/64 (2006.01)

(21) Application number: 14873396.7

(22) Date of filing: 22.12.2014

(86) International application number:
PCT/JP2014/006366

(87) International publication number:
WO 2015/098078 (02.07.2015 Gazette 2015/26)

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR
Designated Extension States:
BA ME

(30) Priority: 27.12.2013 JP 2013271279

(71) Applicant: Panasonic Intellectual Property
Management Co., Ltd.
Osaka-shi, Osaka 570-6207 (JP)

(72) Inventor: KUZUHARA, Satoshi
Osaka 540-6207 (JP)

(74) Representative: Eisenführ Speiser
Patentanwälte Rechtsanwälte PartGmbB
Johannes-Brahms-Platz 1
20355 Hamburg (DE)

(54) **DISPLAY EQUIPMENT AND DISPLAY UNIT**

(57)     A display apparatus of the present technique includes a display unit configured to project an image onto a light transmissive display member, and forms a virtual image, of the image projected by the display unit, on an opposite side of the display member to a user. The display unit is configured such that a display device for displaying an image and a projection optical system for projecting the image displayed on the display device onto the display member are housed in a housing having an opening through which projection light is emitted. The projection optical system includes, on an optical path from the display device to the opening, a first reflection member disposed on a display device side and a second reflection member disposed on an opening side. The first reflection member has a reflection surface which reflects the image displayed on the display device and has a convex shape, and the second reflection member has a reflection surface which projects the image onto the display member and has a free curved concave shape. Further, a relationship between vertical length Yv of the image displayed on the display device and distance T, on a central optical path, from the user to the virtual image satisfies $0.03 < \sqrt{(T \times Lv)}/Yv < 0.22$, where Lv is a vertical length of the virtual image of the image.

FIG. 1

**Description**

TECHNICAL FIELD

The present technique relates to a display apparatus in which a display image is projected on a light transmissive display member so that a virtual image of the display image is visible.

BACKGROUND ART

PTL 1 discloses a head-up display having a curved screen in which a curvature of field of a virtual image is corrected. PTL 2 discloses a head-up display in which a display image is displayed, being divided into two screens.

Citation List

Patent Literatures

PTL 1: Japanese Laid-Open Patent Publication No. 2013-25205
PTL 2: Japanese Laid-Open Patent Publication No. 2013-111999

SUMMARY OF THE INVENTION

A display apparatus of the present technique includes a display unit configured to project an image onto a light transmissive display member to form a virtual image of the image projected by the display unit, on an opposite side of the display member to a user. The display unit is configured such that a display device for displaying an image and a projection optical system for projecting the image displayed on the display device onto the display member are housed in a housing having an opening through which projection light is emitted. The projection optical system includes, on an optical path from the display device to the opening, a first reflection member disposed on a display device side and a second reflection member disposed on an opening side. The first reflection member has a reflection surface which reflects the image displayed on the display device and has a convex shape, and the second reflection member has a reflection surface which projects the image onto the display member and has a free curved concave shape. Further, a relationship between a vertical length Yv of the image displayed on the display device and a distance T, on a central optical path, from the user to the virtual image satisfies $0.03 < \sqrt{(T \times Lv)}/Yv < 0.22$, where Lv is a vertical length of the virtual image of the image.

BRIEF DESCRIPTION OF DRAWINGS

FIG. 1 is an explanatory diagram showing a configuration of an in-vehicle display apparatus including a display unit according to an exemplary embodiment of the present technique.
FIG. 2 is a perspective view showing a configuration of a display unit used in the in-vehicle display apparatus.
FIG. 3 is an explanatory diagram showing a schematic configuration of the display unit.
FIG. 4 is a plan view showing a display surface of the display device.
FIG. 5 is an explanatory diagram showing how a display position of an image displayed on the display device is changed.
FIG. 6 is an explanatory diagram showing how the image projected by a projection optical system is changed by changing the display position of the image displayed on the display device.
FIG. 7 is an explanatory diagram showing a positional relationship among the display device of the display unit, a first mirror, a second mirror, a user, and the virtual image.
FIG. 8 is a plan view showing a positional relationship of the image displayed on the display device.
FIG. 9 is an explanatory diagram showing a relationship between an eye box as a visible area of the user and a virtual image which can be seen by the user, in the present exemplary embodiment.
FIG. 10 is an explanatory diagram showing how the virtual image looks when viewed from different positions (1) to (5) in the eye box as the visible area, in the present exemplary embodiment.
FIG. 11 is a perspective view showing a configuration of another exemplary embodiment of the display unit used for the in-vehicle display apparatus.

FIG. 12 is a perspective view showing another example of the first mirror.

FIG. 13 is an explanatory diagram showing an example of a mirror having a free curved reflection surface.

## DESCRIPTION OF EMBODIMENTS

In the following, a display unit and a display apparatus according to an exemplary embodiment of the present technique will be described with reference to the drawings. However, the exemplary embodiments will not be described in detail in some cases. For example, in some cases, unnecessarily detailed description on already well-known matters or redundant description on substantially identical configurations will not be made. This is to avoid the description being unnecessarily redundant and to help those skilled in the art to easily understand. Note that the inventor provides the accompanying drawings and the following description to help those skilled in the art to sufficiently understand the present technique, but does not intend to use the drawings or description to limit the subject matters of the claims.

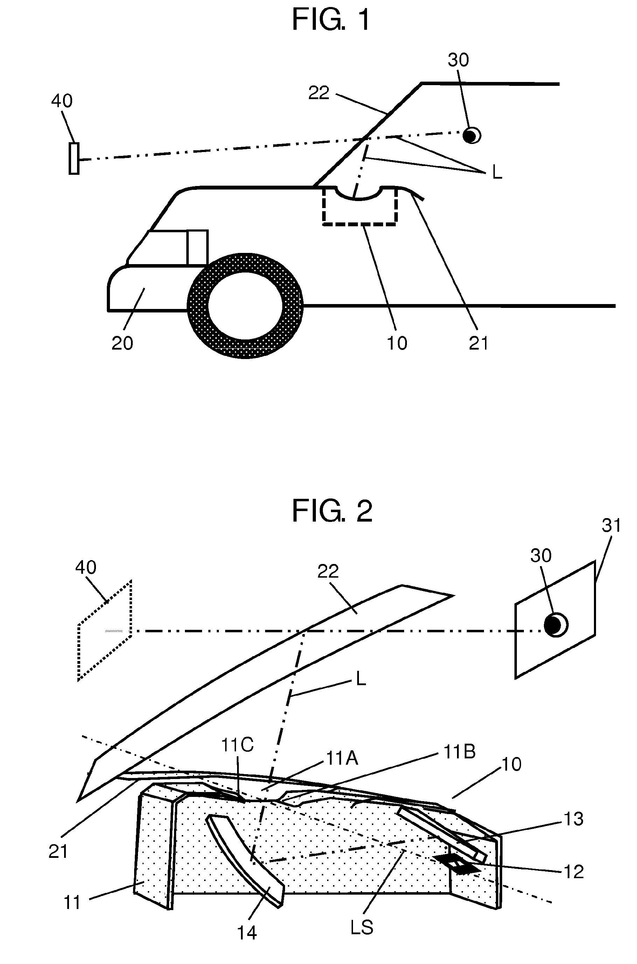

FIG. 1 is an explanatory diagram showing a configuration of an in-vehicle display apparatus including a display unit according to an exemplary embodiment of the present technique.

As shown in FIG. 1, the in-vehicle display apparatus according to the present exemplary embodiment is configured such that display unit 10 for projecting an image is disposed in dashboard 21 of vehicle 20. Display unit 10 projects an image on windshield 22 as a light transmissive display member disposed in vehicle 20, and thus forms, on an opposite side of windshield 22 to user 30, virtual image 40 of the image projected by display unit 10. User 30 can see, through windshield 22, virtual image 40 of the image projected by display unit 10. The chain double-dashed line shown in FIG. 1 represents central optical path L of the projected image, and also in the following description, central optical path L is represented by a chain double-dashed line in the drawings.

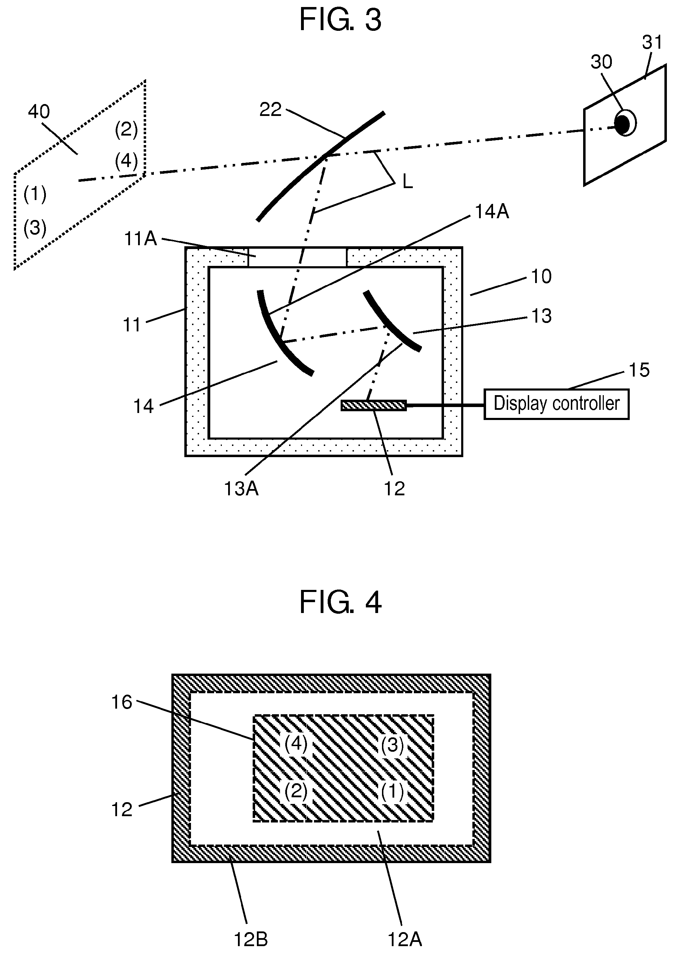

FIG. 2 is a perspective view showing a configuration of the display unit used in the in-vehicle display apparatus. FIG. 2 shows the configuration with a part of a housing of the display unit cut away. FIG. 3 is an explanatory diagram showing a schematic configuration of the display unit.

As shown in FIG. 2 and FIG. 3, display unit 10 according to the present exemplary embodiment is configured such that housing 11 having opening 11A houses therein display device 12 for displaying an image and a projection optical system for projecting the image displayed on display device 12 onto windshield 22 as the display member. This arrangement enables user 30 to see virtual image 40 of the image through windshield 22 as the display member. Regarding the image projected onto windshield 22 as the display member, virtual image 40 of the image can be seen by user 30 from eye box 31 as a previously assumed visible area.

Opening 11A of housing 11 forms an emitting window through which the projection light from the projection optical system is emitted. Opening 11A of housing 11 may be provided with a light transmissive cover made of a transparent resin sheet or the like such so as to close opening 11A.

As display device 12, there is used a liquid crystal display, an organic EL display, a plasma display, or the like, and a predetermined image is displayed in a display area of display device 12, based on an image signal being input from display controller 15.

In addition, the projection optical system includes, on the optical path from display device 12 to windshield 22 as the display member, first mirror 13 as a first reflection member disposed on a display device 12 side and second mirror 14 as a second reflection member disposed on a display member side, that is, on an opening 11A side through which the projection light of the image displayed on display device 12 is emitted.

As shown in FIG. 2, in housing 11 of display unit 10, opening 11A through which the projection light is emitted has: first edge 11B formed in a circumferential area on a first mirror 13 side of opening 11A; and second edge 11C formed in a circumferential on a second mirror 14 side of opening 11A. Display device 12 is disposed such that the display area on which the image is being displayed is located on the first mirror 13 side, with respect to straight line LS connecting first edge 11B and second edge 11C. With this arrangement, even if external light enters into display unit 10, entering of the external light into the display area of display device 12 can be controlled; thus, virtual image 40 of high quality can be formed.

FIG. 4 is a plan view showing a display surface of the display device. As shown in FIG. 4, rectangular display device 12 has: rectangular display area 12A for displaying predetermined image 16, based on an image signal being input from display controller 15; and non-display area 12B formed in an area surrounding display area 12A. Further, image 16 displayed on display device 12 is vertically and horizontally reversed with respect to virtual image 40 displayed by display unit 10. Marks (1), (2), (3), and (4) added on virtual image 40 shown in FIG. 3 to indicate positions and marks (1), (2), (3), and (4) added on image 16 shown in FIG. 4 to indicate positions illustrate that image 16 displayed on display device 12 is reversed with respect to virtual image 40 formed by display unit 10.

Display controller 15 is configured to be able to change the display position of image 16 in display area 12A by controlling the image signal being input to display device 12.

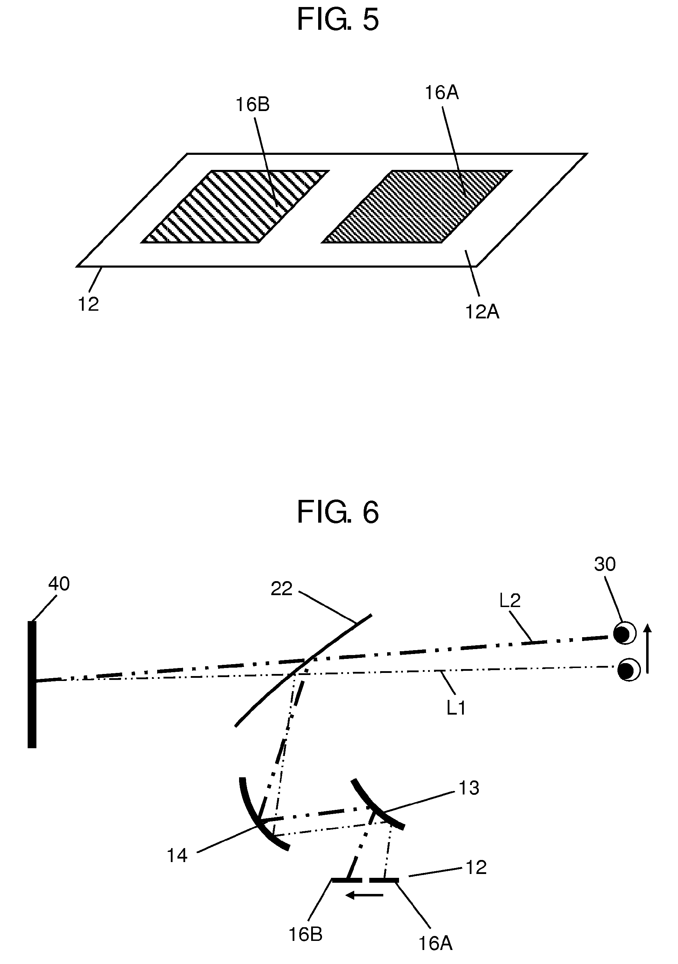

FIG. 5 is an explanatory diagram showing how the display position of the image displayed on the display device is changed. FIG. 6 is an explanatory diagram showing how the image projected by the projection optical system is changed by changing the display position of the image displayed on the display device.

As shown in FIG. 5, display controller 15 can control the image signal so that the position of the image displayed on display device 12 is changed from display position 16A to display position 16B. Note that the display position is not limited to two display positions 16A and 16B, and can be set to an arbitrary position by display controller 15.

As shown in FIG. 6, when the position of the image is controlled to be changed from display position 16A to display position 16B, the central optical path of the projected image is changed from L1 to L2, whereby the position of the viewpoint of user 30 viewing virtual image 40 is changed.

That is, display unit 10 according to the present exemplary embodiment has a configuration in which the position of the image displayed on display device 12 can be changed by controlling display controller 15, and thus user 30 can see appropriate virtual image 40 depending on the position of the viewpoint of user 30. For example, when display unit 10 is mounted in vehicle 20, a mounting error of display unit 10 is caused. With display unit 10 of the present exemplary embodiment, display controller 15 is controlled to adjust the display position of the image displayed on display device 12 so that user 30 can see appropriate virtual image 40; therefore, the mounting error can be corrected by display unit 10 itself. In addition, when user 30 is changed, the position of the viewpoint of user 30 may change. In that case, display controller 15 can be controlled to adjust display positions 16A and 16B of image 16 displayed on display device 12 so that user 30 can see appropriate virtual image 40.

Incidentally, in order to enable user 30 to see appropriate virtual image 40 in the display apparatus of the present exemplary embodiment, it is preferable that the viewpoint of user 30 is located almost at a center of eye box 31 as the visible area. Therefore, when the position of the viewpoint of user 30 has been changed, display controller 15 controls to move display positions 16A and 16B of image 16 displayed on display device 12 so that the viewpoint of user 30 is located almost at a center of eye box 31 as the visible area.

The results of conducted experiments show that Vi/Is is preferably equal to or more than two and less than seven, where Vi is a moving amount of a viewpoint area of a user, and Is is a moving amount of image 16 displayed on display device 12. It is more preferable that display controller 15 controls the moving amount of image 16 so that Vi/Is is equal to or more than four and less than six. It is found that if Vi/Is is equal to or more than seven, distortion of the image observed in eye box 31 of user 30 is large, and if Vi/Is is less than two, eye box 31 as the visible area of user 30 is small.

First mirror 13 as the first reflection member of the projection optical system is disposed vertically above the display surface of display device 12, that is, display area 12A. In first mirror 13, reflection surface 13A for reflecting the image displayed on display device 12 has a free curved convex shape. Second mirror 14 as the second reflection member of the projection optical system is disposed, on the optical path reflected by reflection surface 13A of first mirror 13, vertically below windshield 22 as the display member. In second mirror 14, reflection surface 14A having a free curved concave shape faces reflection surface 13A of first mirror 13 and projects the image onto windshield 22 as the display member.

Next, arrangement of display device 12, first mirror 13, and second mirror 14 in display unit 10 will be described.

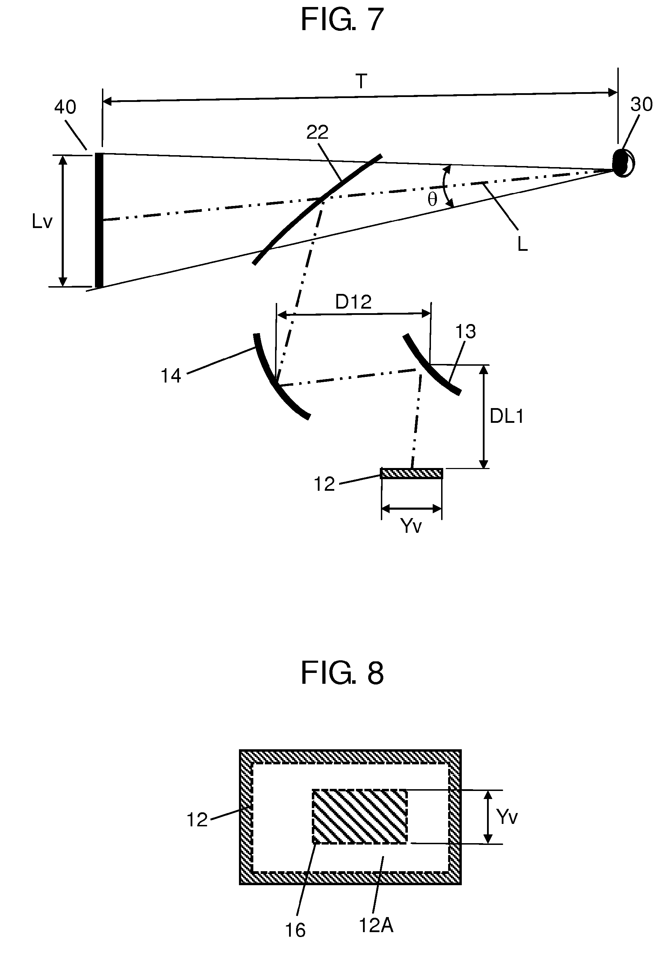

FIG. 7 is an explanatory diagram showing a positional relationship among the display device of the display unit, the first mirror, the second mirror, the user, and the virtual image. FIG. 8 is a plan view showing a positional relationship of the image displayed on the display device. The reference marks shown in FIG. 7 and FIG. 8 are defined below. The distances among display device 12, first mirror 13, and second mirror 14 represent lengths on the central optical path.

D12 is the distance between first mirror 13 and second mirror 14;

Lv is the vertical length ($T \times \tan\theta$) of virtual image 40;

T is the distance, on the central optical path, from a pupil of user 30 to virtual image 40;

$\theta$ is the angle in the vertical direction when virtual image 40 is viewed from the pupil of user 30;

Yv is the vertical length (corresponding to the vertical length of the virtual image) of image 16 displayed on display device 12; and

DL1 is the distance between first mirror 13 and image 16 on display device 12.

The display apparatus using display unit 10 according to the present exemplary embodiment is arranged such that distance D12 between first mirror 13 and second mirror 14 satisfies $0.2 < D12/Lv < 1.3$. It is preferable that the display apparatus is arranged such that distance D12 between first mirror 13 and second mirror 14 satisfies $0.5 < D12/Lv < 1.0$. It is more preferable that the display apparatus is arranged such that an upper limit of distance D12 between first mirror 13 and second mirror 14 satisfies $D12/Lv < 0.9$.

This arrangement enables user 30 to see sufficiently large virtual image 40 even with small display unit 10 in which the distance between first mirror 13 and second mirror 14 is small. This arrangement can prevent a curvature of second mirror 14 from becoming large, and thus a screen distortion of virtual image 40 can also be easily corrected. That is, the present exemplary embodiment can realize downsizing of display unit 10.

The display apparatus of the present exemplary embodiment is also configured such that the relationship between vertical length Yv of image 16 displayed on display device 12 and distance T, on the central optical path, from user 30 to virtual image 40 satisfies $0.03 < \sqrt{(T \times Lv)}/Yv < 0.22$.

Here, in the present exemplary embodiment, if the relationship $\sqrt{(T \times Lv)}/Yv$ between vertical length Yv of image 16 and distance T from user 30 to virtual image 40 is more than 0.22, the distance from user 30 to virtual image 40 is large, whereby the display apparatus becomes large. On the other hand, if the relationship $\sqrt{(T \times Lv)}/Yv$ between vertical length Yv of image 16 and distance T from user 30 to virtual image 40 is less than 0.03, the vertical length of image 16 displayed on display device 12 needs to be large, and as a result, display unit 10 becomes large. That is, according to the present exemplary embodiment, it is possible to realize downsizing of display unit 10 and downsizing of the display apparatus using display unit 10.

In addition, the display apparatus using display unit 10 according to the present exemplary embodiment is configured such that distance D12 between first mirror 13 and second mirror 14 and distance DL1 between first mirror 13 and image 16 on display device 12 satisfy 3.0 < D12/DL1. It is preferable that the display apparatus is configured such that distance D12 between first mirror 13 and second mirror 14 and distance DL1 between first mirror 13 and image 16 on display device 12 satisfy 3.5 < D12/DL1 < 10.0. It is more preferable that the display apparatus is configured such that distance D12 between first mirror 13 and second mirror 14 and distance DL1 between first mirror 13 and image 16 on display device 12 satisfy 5.0 < D12/DL1 < 8.0.

In the present exemplary embodiment, by configuring such that distance D12 between first mirror 13 and second mirror 14 and distance DL1 between first mirror 13 and image 16 on display device 12 satisfy 3.0 < D12/DL1, the curvature of second mirror 14 can be prevented from becoming large, whereby the screen distortion of virtual image 40 can be also easily corrected. That is, according to the present exemplary embodiment, it is possible to downsize display unit 10.

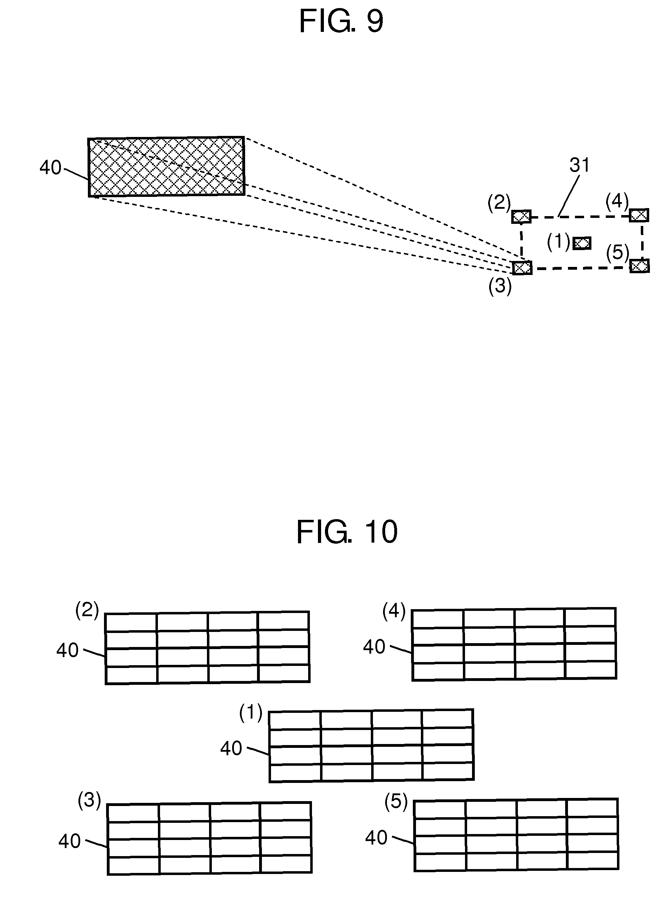

FIG. 9 is an explanatory diagram showing a relationship between the eye box as the visible area of the user and the virtual image which can be seen by the user, in the present exemplary embodiment. FIG. 9 is a diagram when virtual image 40 is viewed from a lower left position (3) of eye box 31.

FIG. 10 is an explanatory diagram showing how the virtual image looks when viewed from different positions (1) to (5) in the eye box as the visible area, in the present exemplary embodiment. Here, the visible area (eye box) is an area in which the user can observe the entire virtual image without any missing part, and the visible area (eye box) has a rectangular shape of 120 mm width × 35 mm height, in the present exemplary embodiment.

As shown FIG. 10, with the display apparatus according to the present exemplary embodiment, the screen distortion is corrected for the entire area of eye box 31 when virtual image 40 is viewed from the positions (1) to (5) in eye box 31. In other words, user 30 can see satisfactory virtual image 40 from the entire area of eye box 31.

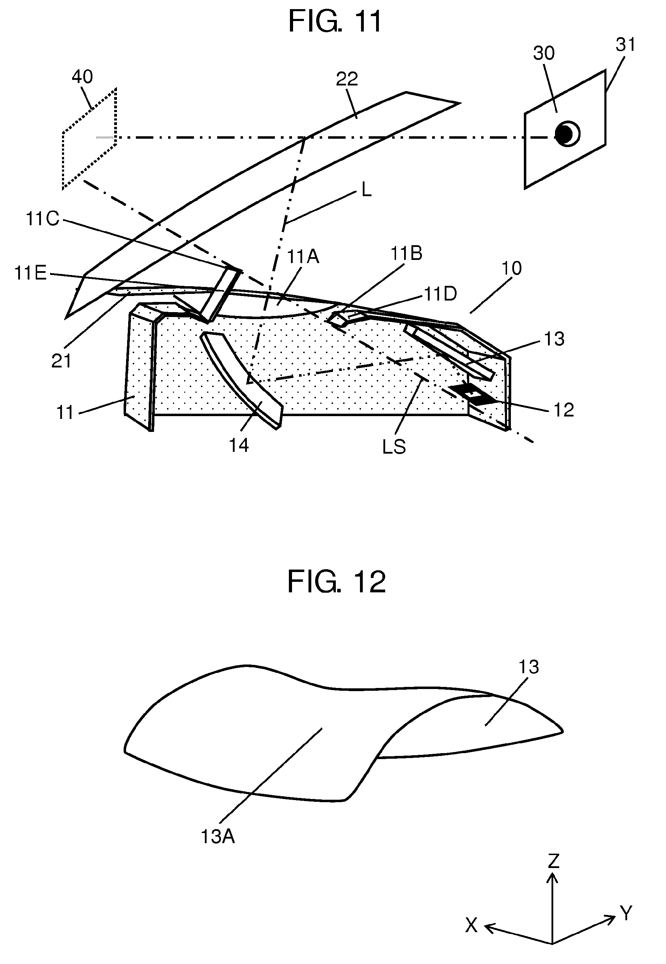

FIG. 11 is a perspective view showing a configuration of another exemplary embodiment of the display unit used for the in-vehicle display apparatus. In the present exemplary embodiment, as shown in FIG. 11, in housing 11 of display unit 10, first light shielding part 11D is provided in a circumferential area on the first mirror 13 side of opening 11A through which the projection light passes, and second light shielding part 11E is provided in a circumferential area on the second mirror 14 side of opening 11A, to have a shape which seems to have been cut and raised from housing 11. First light shielding part 11D has first edge 11B, and second light shielding part 11E has second edge 11C. Display device 12 is disposed such that the display area for displaying the image is located on the first mirror 13 side, with respect to straight line LS connecting first edge 11B and second edge 11C.

With this arrangement, even if external light enters into display unit 10, entering of the external light into the display area of display device 12 can be controlled; thus, virtual image 40 of high quality can be formed. In addition, with the present exemplary embodiment, since first light shielding part 11D and second light shielding part 11E are provided, an opening area of opening 11A can be large; thus, large degree of freedom in design is secured.

As described above, according to the present technique, display unit 10 for projecting an image is configured such that display device 12 configured to display an image and the projection optical system configured to project the image displayed on display device 12 onto the display member are housed in housing 11 having opening 11A through which projection light is emitted. The projection optical system includes, on the optical path from display device 12 to opening 11A, first mirror 13 disposed on the display device 12 side; and second mirror 14 disposed on the opening 11A side. First mirror 13 has reflection surface 13A which reflects the image displayed on display device 12 and has a free curved convex shape, and second mirror 14 has reflection surface 14A which projects the image onto the display member and has a free curved concave shape. Further, the relationship between vertical length Yv of image 16 displayed on display device 12 and distance T, on the central optical path, from user 30 to virtual image 40 satisfies $0.03 < \sqrt{(T \times Lv)}/Yv < 0.22$, where Lv is the vertical length of virtual image 40 of the image.

With this arrangement, the distance from user 30 to virtual image 40 is not large, and the vertical length of image 16 displayed on display device 12 does not need to be large; thus, it is possible to downsize display unit 10 and the display apparatus using display unit 10.

In addition, with the present technique, it is possible to successfully correct the screen distortion occurred in windshield 22 as the display member having a predetermined curvature; thus, the virtual image of the image formed on the opposite side of the display member to the user has a small screen distortion, whereby the user can see the virtual image without feeling strange.

Here, reflection surface 13A of first mirror 13 of display unit 10 according to the present technique has a rotationally asymmetric convex shape. With this arrangement, it is possible to successfully correct the screen distortion over the entire viewpoint area of the user. In addition, it is preferable that reflection surface 13A of first mirror 13 has a convex shape in the horizontal direction. This arrangement enables the curvature, in the horizontal direction, of reflection surface 14A of second mirror 14 to increase; thus, the display apparatus can be downsized.

Although the above exemplary embodiment is described using the case where reflection surface 13A of first mirror 13 has a free curved convex shape, reflection surface 13A may be a toroidal surface having a convex surface in the horizontal direction. Note that the "toroidal surface" represents an aspherical surface shape having different curvatures in the horizontal direction and the vertical direction, which are orthogonal to each other.

Further, reflection surface 13A of first mirror 13 may have a rotationally asymmetric shape having different curvatures in the X-axis direction and the Y-axis direction, as shown in FIG. 12.

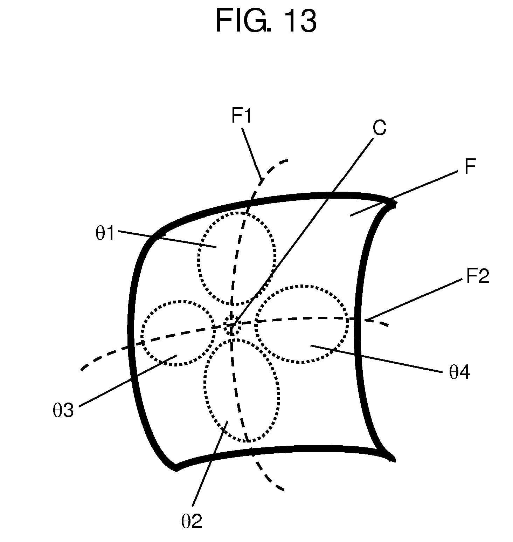

FIG. 13 is an explanatory diagram showing an example of a mirror whose reflection surface is a free curved surface. As shown in FIG. 13, the free curved reflection surface is defined as below.

In reflection surface F, when vertical reference curve F1 and horizontal reference curve F2 both passing through optical axis C of a central optical path of an image are set, reflection surface F has reflection areas θ1, θ2, θ3, and θ4 having different curvatures with a point, at which vertical reference curve F1 and horizontal reference curve F2 intersect, as a border.

EXAMPLES

In the following, specific examples will be described with respect to the display apparatus according to the present technique. Note that, in the examples to be described below, the unit of length and the unit of angle in the tables are respectively mm and degree. In addition, the free curved surface is defined by the following mathematical expression.

$$\text{Mathematical Expression 1:}$$

$$\frac{c r^2}{1 + \sqrt{1 - (1+k)c^2 r^2}} + \sum_{j=2} C_j x^m y^n$$

$$j = \frac{(m+n)^2 + m + 3n}{2} + 1$$

In Mathematical Expression 1, z is a sag amount at a position (x, y) with respect to the axes defining the surface; r is a radius of curvature at the origin of the axes defining the surface; c is a curvature at the origin of the axes defining the surface; k is a conic constant; and $C_j$ is a coefficient of a monomial $x^m y^n$.

Further, in the examples, the coordinate origin as a reference is the center of the image (display surface) displayed in display device 12; and in the tables, the horizontal direction of the display surface is represented as the X-axis, the vertical direction is represented as the Y-axis, and the direction perpendicular to the display surface is represented as the Z-axis.

In the tables, surface number 1 represents the display surface of display device 12; surface number 2 represents first mirror 13; surface number 3 represents second mirror; surface number 4 represents windshield 22; and surface number 5 represents the viewpoint of a user. Further, in the eccentricity data, ADE represents an amount by which the mirror is rotated from the Z-axis direction to the Y-axis direction about the X-axis, BDE represents an amount by which the mirror is rotated from the X-axis direction to the Z-axis direction about the Y-axis, and CDE represents an amount by which the mirror is rotated from the X-axis direction to the Y-axis direction about the Z-axis.

Example 1

Table 1

| Surface number | X curvature | Y curvature |
|---|---|---|
| 2 | 603.2021 | 2654.4 |

Table 2

| Surface number | Coefficient of polynomial | | | | | | | |
|---|---|---|---|---|---|---|---|---|
| 3 | C1 | 0.00000E+00 | C19 | 4.87235E-12 | C37 | 0.00000E+00 | C55 | 0.00000E+00 |
| | C2 | -3.53809E-02 | C20 | -1.22754E-10 | C38 | 0.00000E+00 | C56 | 0.00000E+00 |
| | C3 | 1.28613E-02 | C21 | 3.76537E-10 | C39 | 0.00000E+00 | C57 | 0.00000E+00 |
| | C4 | 6.92444E-04 | C22 | -2.41643E-14 | C40 | 0.00000E+00 | C58 | 0.00000E+00 |
| | C5 | 5.21278E-06 | C23 | 5.70609E-14 | C41 | 0.00000E+00 | C59 | 0.00000E+00 |
| | C6 | 2.72060E-04 | C24 | -1.55312E-13 | C42 | 0.00000E+00 | C60 | 0.00000E+00 |
| | C7 | -3.35289E-07 | C25 | 5.63778E-13 | C43 | 0.00000E+00 | C61 | 0.00000E+00 |
| | C8 | -2.38015E-07 | C26 | -1.72194E-12 | C44 | 0.00000E+00 | C62 | 0.00000E+00 |
| | C9 | -1.86100E-07 | C27 | 3.64513E-12 | C45 | 0.00000E+00 | C63 | 0.00000E+00 |
| | C10 | -1.06353E-06 | C28 | -6.10356E-12 | C46 | 0.00000E+00 | C64 | 0.00000E+00 |
| | C11 | 2.39274E-09 | C29 | 0.00000E+00 | C47 | 0.00000E+00 | C65 | 0.00000E+00 |
| | C12 | -1.23325E-10 | C30 | 0.00000E+00 | C48 | 0.00000E+00 | C66 | 0.00000E+00 |
| | C13 | 5.27888E-09 | C31 | 0.00000E+00 | C49 | 0.00000E+00 | | |
| | C14 | -7.12437E-09 | C32 | 0.00000E+00 | C50 | 0.00000E+00 | | |
| | C15 | 1.34163E-08 | C33 | 0.00000E+00 | C51 | 0.00000E+00 | | |
| | C16 | 9.51762E-13 | C34 | 0.00000E+00 | C52 | 0.00000E+00 | | |
| | C17 | -1.48362E-11 | C35 | 0.00000E+00 | C53 | 0.00000E+00 | | |
| | C18 | 9.29390E-12 | C36 | 0.00000E+00 | C54 | 0.00000E+00 | | |

Table 3

| Surface number | Shape | Eccentricity data | | | | | |
|---|---|---|---|---|---|---|---|
| | | X | Y | Z | ADE | BDE | CDE |
| 1 | | 0 | 0 | 0 | 0 | 0 | 0 |
| 2 | Toroidal | -1.836 | 2.033 | 48.083 | -30.835 | 2.234 | 0.577 |
| 3 | Free curved surface | 1.602 | 116.142 | -7.383 | -41.903 | 2.082 | 0.995 |
| 4 | Toroidal | 12.044 | 5.809 | 256.018 | 43.684 | 5.817 | 2.521 |
| 5 | | 203.349 | -755.414 | 511.993 | 109.093 | 6.642 | -8.320 |

Example 2

Table 4

| Surface number | Coefficient of polynomial | | | | | | |
|---|---|---|---|---|---|---|---|
| 2 | C1 | 0.00000E+00 | C19 | 2.41168E-11 | C37 | 0.00000E+00 | C55 | 0.00000E+00 |
| | C2 | -2.37943E-02 | C20 | -1.90336E-10 | C38 | 0.00000E+00 | C56 | 0.00000E+00 |
| | C3 | 1.69540E-02 | C21 | 2.95788E-10 | C39 | 0.00000E+00 | C57 | 0.00000E+00 |
| | C4 | 6.95718E-04 | C22 | -1.14425E-14 | C40 | 0.00000E+00 | C58 | 0.00000E+00 |
| | C5 | 2.53616E-05 | C23 | 9.02420E-14 | C41 | 0.00000E+00 | C59 | 0.00000E+00 |
| | C6 | 2.93214E-04 | C24 | -1.18772E-13 | C42 | 0.00000E+00 | C60 | 0.00000E+00 |
| | C7 | -4.97930E-07 | C25 | 2.31335E-13 | C43 | 0.00000E+00 | C61 | 0.00000E+00 |
| | C8 | -6.24744E-07 | C26 | -9.13190E-13 | C44 | 0.00000E+00 | C62 | 0.00000E+00 |
| | C9 | -6.72213E-07 | C27 | 3.19186E-12 | C45 | 0.00000E+00 | C63 | 0.00000E+00 |
| | C10 | -4.12374E-07 | C28 | -4.36103E-12 | C46 | 0.00000E+00 | C64 | 0.00000E+00 |
| | C11 | 1.40407E-09 | C29 | 0.00000E+00 | C47 | 0.00000E+00 | C65 | 0.00000E+00 |
| | C12 | -3.73506E-10 | C30 | 0.00000E+00 | C48 | 0.00000E+00 | C66 | 0.00000E+00 |
| | C13 | 4.88892E-09 | C31 | 0.00000E+00 | C49 | 0.00000E+00 | | |
| | C14 | -3.10558E-09 | C32 | 0.00000E+00 | C50 | 0.00000E+00 | | |
| | C15 | 8.54164E-09 | C33 | 0.00000E+00 | C51 | 0.00000E+00 | | |
| | C16 | -8.95059E-13 | C34 | 0.00000E+00 | C52 | 0.00000E+00 | | |
| | C17 | -1.47160E-11 | C35 | 0.00000E+00 | C53 | 0.00000E+00 | | |
| | C18 | -1.83957E-12 | C36 | 0.00000E+00 | C54 | 0.00000E+00 | | |
| 3 | C1 | 0.00000E+00 | C19 | -1.44244E-10 | C37 | 0.00000E+00 | C55 | 0.00000E+00 |
| | C2 | 5.55069E-02 | C20 | -1.13270E-09 | C38 | 0.00000E+00 | C56 | 0.00000E+00 |
| | C3 | 2.88012E-02 | C21 | 5.86354E-10 | C39 | 0.00000E+00 | C57 | 0.00000E+00 |
| | C4 | 1.79659E-04 | C22 | -7.19280E-13 | C40 | 0.00000E+00 | C58 | 0.00000E+00 |
| | C5 | -2.29361 E-05 | C23 | 7.83822E-12 | C41 | 0.00000E+00 | C59 | 0.00000E+00 |
| | C6 | -4.44075E-04 | C24 | 5.78822E-14 | C42 | 0.00000E+00 | C60 | 0.00000E+00 |
| | C7 | -2.94434E-06 | C25 | 3.58110E-12 | C43 | 0.00000E+00 | C61 | 0.00000E+00 |
| | C8 | -4.46411 E-06 | C26 | -9.17880E-12 | C44 | 0.00000E+00 | C62 | 0.00000E+00 |
| | C9 | -2.97119E-06 | C27 | 1.87450E-11 | C45 | 0.00000E+00 | C63 | 0.00000E+00 |
| | C10 | 3.34442E-06 | C28 | -7.35955E-11 | C46 | 0.00000E+00 | C64 | 0.00000E+00 |
| | C11 | -1.18069E-08 | C29 | 9.28492E-15 | C47 | 0.00000E+00 | C65 | 0.00000E+00 |
| | C12 | -2.24904E-08 | C30 | -1.66169E-14 | C48 | 0.00000E+00 | C66 | 0.00000E+00 |
| | C13 | 3.83585E-08 | C31 | -3.33447E-14 | C49 | 0.00000E+00 | | |
| | C14 | -5.06094E-09 | C32 | -6.11151E-14 | C50 | 0.00000E+00 | | |
| | C15 | 1.15003E-07 | C33 | -7.48046E-14 | C51 | 0.00000E+00 | | |
| | C16 | -4.48742E-11 | C34 | 1.58819E-13 | C52 | 0.00000E+00 | | |
| | C17 | 6.52135E-11 | C35 | 6.56811 E-13 | C53 | 0.00000E+00 | | |
| | C18 | -2.66825E-10 | C36 | 1.08622E-14 | C54 | 0.00000E+00 | | |

Table 5

| Surface number | Shape | Eccentricity data | | | | | |
|---|---|---|---|---|---|---|---|
| | | X | Y | Z | ADE | BDE | CDE |
| 1 | | 0 | 0 | 0 | 0 | 0 | 0 |
| 2 | Free curved surface | -0.377 | 6.917 | 47.660 | -27.080 | 0.566 | -0.024 |
| 3 | Free curved surface | 0.676 | 119.411 | -11.103 | -40.435 | 0.556 | 0.108 |
| 4 | Toroidal | 21.177 | 17.593 | 255.181 | 45.060 | 6.490 | 4.825 |
| 5 | | 245.397 | -728.488 | 528.440 | 110.670 | 9.006 | -7.980 |

Example 3

Table 6

| Surface number | X curvature | Y curvature |
|---|---|---|
| 2 | 711.0349 | 628.2919 |

Table 7

| Surface number | Coefficient of polynomial | | | | | | | |
|---|---|---|---|---|---|---|---|---|
| 2 | C1 | -7.74625E+00 | C19 | 2.49212E-11 | C37 | 9.30119E-19 | C55 | 5.72526E-18 |
| | C2 | -1.73760E-02 | C20 | 5.59040E-11 | C38 | 1.67547E-18 | C56 | -1.43014E-22 |
| | C3 | -3.54173E-02 | C21 | 2.13743E-11 | C39 | 2.20897E-19 | C57 | -1.67215E-23 |
| | C4 | 5.57437E-04 | C22 | -1.14501E-15 | C40 | -2.43948E-17 | C58 | -4.39331 E-22 |
| | C5 | 4.91213E-05 | C23 | -2.39542E-14 | C41 | -2.78455E-18 | C59 | 5.33256E-22 |
| | C6 | 2.72918E-04 | C24 | 5.34863E-14 | C42 | -9.89926E-18 | C60 | 8.68017E-22 |
| | C7 | 6.70001E-08 | C25 | 5.49852E-13 | C43 | 2.10560E-17 | C61 | -1.46669E-21 |
| | C8 | -3.68481 E-07 | C26 | -3.26715E-13 | C44 | 4.10178E-16 | C62 | 4.57527E-21 |
| | C9 | -7.18698E-08 | C27 | -9.84776E-13 | C45 | 3.85909E-16 | C63 | -3.00340E-21 |
| | C10 | -1.97712E-07 | C28 | -9.93883E-13 | C46 | 1.40656E-20 | C64 | -2.54986E-20 |
| | C11 | 1.61710E-09 | C29 | 6.07330E-16 | C47 | -1.45731 E-22 | C65 | 1.92867E-21 |
| | C12 | 4.96069E-11 | C30 | -1.17494E-16 | C48 | 8.90634E-20 | C66 | -8.45424E-20 |
| | C13 | 3.19279E-09 | C31 | -8.05043E-16 | C49 | 9.38960E-20 | | |
| | C14 | -2.68371 E-09 | C32 | -2.62095E-15 | C50 | -2.95915E-19 | | |
| | C15 | 5.40272E-09 | C33 | 1.69253E-15 | C51 | -4.41647E-20 | | |
| | C16 | -1.87291E-11 | C34 | -7.25278E-15 | C52 | 6.92333E-19 | | |
| | C17 | -1.72096E-12 | C35 | -1.56103E-14 | C53 | 1.81955E-18 | | |
| | C18 | -5.14945E-12 | C36 | -2.44877E-14 | C54 | -1.17293E-18 | | |

Table 8

| Surface number | Shape | Eccentricity data | | | | | |
|---|---|---|---|---|---|---|---|
| | | X | Y | Z | ADE | BDE | CDE |
| 1 | | 0 | 0 | 0 | 0 | 0 | 0 |
| 2 | Toroidal | 2.933 | 1.054 | 45.949 | -39.465 | -1.082 | -4.335 |
| 3 | Free curved surface | 8.680 | 162.225 | 18.038 | -58.032 | 0.358 | -4.453 |
| 4 | Toroidal | 59.478 | 20.245 | 245.022 | 31.889 | 2.347 | 1.388 |
| 5 | | 168.515 | -800.395 | 336.634 | 96.038 | 4.685 | -6.441 |

Example 4

Table 9

| Surface number | Coefficient of polynomial | | | | | | | |
|---|---|---|---|---|---|---|---|---|
| | C1 | 0.00000E+00 | C19 | -1.28160E-10 | C37 | 0.00000E+00 | C55 | 0.00000E+00 |
| | C2 | -1.88798E-03 | C20 | -4.88795E-10 | C38 | 0.00000E+00 | C56 | 0.00000E+00 |
| | C3 | -1.16384E-02 | C21 | 4.65021 E-11 | C39 | 0.00000E+00 | C57 | 0.00000E+00 |
| | C4 | -2.20104E-05 | C22 | 1.79401 E-12 | C40 | 0.00000E+00 | C58 | 0.00000E+00 |
| | C5 | -5.60173E-05 | C23 | 9.52643E-13 | C41 | 0.00000E+00 | C59 | 0.00000E+00 |
| | C6 | -8.71798E-05 | C24 | 1.70778E-12 | C42 | 0.00000E+00 | C60 | 0.00000E+00 |
| | C7 | -1.37429E-06 | C25 | 9.42122E-13 | C43 | 0.00000E+00 | C61 | 0.00000E+00 |
| | C8 | -2.39788E-06 | C26 | 2.23806E-12 | C44 | 0.00000E+00 | C62 | 0.00000E+00 |
| | C9 | -4.08949E-06 | C27 | -1.08763E-12 | C45 | 0.00000E+00 | C63 | 0.00000E+00 |
| 2 | C10 | 1.08131E-06 | C28 | 4.61590E-12 | C46 | 0.00000E+00 | C64 | 0.00000E+00 |
| | C11 | -8.45057E-09 | C29 | 0.00000E+00 | C47 | 0.00000E+00 | C65 | 0.00000E+00 |
| | C12 | 4.32821 E-09 | C30 | 0.00000E+00 | C48 | 0.00000E+00 | C66 | 0.00000E+00 |
| | C13 | 2.24025E-08 | C31 | 0.00000E+00 | C49 | 0.00000E+00 | | |
| | C14 | 1.51402E-08 | C32 | 0.00000E+00 | C50 | 0.00000E+00 | | |
| | C15 | -5.48935E-09 | C33 | 0.00000E+00 | C51 | 0.00000E+00 | | |
| | C16 | -6.11656E-11 | C34 | 0.00000E+00 | C52 | 0.00000E+00 | | |
| | C17 | -2.97250E-10 | C35 | 0.00000E+00 | C53 | 0.00000E+00 | | |
| | C18 | -1.38852E-10 | C36 | 0.00000E+00 | C54 | 0.00000E+00 | | |

(continued)

| Surface number | Coefficient of polynomial | | | | | | | |
|---|---|---|---|---|---|---|---|---|
| 3 | C1 | -4.13454E+00 | C19 | 2.13613E-11 | C37 | 5.30403E-19 | C55 | 5.51614E-18 |
| | C2 | -1.25103E-02 | C20 | 4.26555E-11 | C38 | 1.84207E-18 | C56 | -1.19051 E-22 |
| | C3 | -3.33999E-02 | C21 | 3.42848E-11 | C39 | -9.20942E-19 | C57 | -7.26209E-24 |
| | C4 | 5.57897E-04 | C22 | -2.89755E-14 | C40 | -2.48408E-17 | C58 | -4.55573E-22 |
| | C5 | 4.81348E-05 | C23 | -2.72475E-14 | C41 | 3.64698E-18 | C59 | 3.97866E-22 |
| | C6 | 2.73964E-04 | C24 | 3.73200E-14 | C42 | -6.26492E-18 | C60 | 7.64242E-22 |
| | C7 | -9.02684E-08 | C25 | 4.71097E-13 | C43 | 1.51546E-17 | C61 | -1.46295E-21 |
| | C8 | -5.62752E-07 | C26 | -2.32457E-13 | C44 | 3.47700E-16 | C62 | 3.58028E-21 |
| | C9 | -4.16046E-07 | C27 | -1.07144E-12 | C45 | 3.67879E-16 | C63 | -4.69101 E-21 |
| | C10 | -1.75022E-07 | C28 | -7.46368E-13 | C46 | 1.68651E-20 | C64 | -2.21322E-20 |
| | C11 | 1.75704E-09 | C29 | 5.65531 E-16 | C47 | 9.24582E-22 | C65 | 8.72864E-21 |
| | C12 | 3.90988E-10 | C30 | -2.56218E-16 | C48 | 1.00871E-19 | C66 | -7.82403E-20 |
| | C13 | 2.80206E-09 | C31 | -6.36585E-16 | C49 | 8.61703E-20 | | |
| | C14 | -1.45904E-09 | C32 | -1.97885E-15 | C50 | -2.61479E-19 | | |
| | C15 | 4.27866E-09 | C33 | 1.74136E-15 | C51 | 6.79566E-20 | | |
| | C16 | -1.86021E-11 | C34 | -7.29656E-15 | C52 | 6.59543E-19 | | |
| | C17 | -6.34215E-13 | C35 | -1.68610E-14 | C53 | 1.68901 E-18 | | |
| | C18 | -1.08581E-11 | C36 | -2.53896E-14 | C54 | -9.15230E-19 | | |

Table 10

| Surface number | Shape | Eccentricity data | | | | | |
|---|---|---|---|---|---|---|---|
| | | X | Y | Z | ADE | BDE | CDE |
| 1 | | 0 | 0 | 0 | 0 | 0 | 0 |
| 2 | Free curved surface | -3.139 | 4.384 | 51.009 | -33.675 | 5.137 | -0.818 |
| 3 | Free curved surface | 9.725 | 159.210 | 1.656 | -50.376 | 5.155 | 0.690 |
| 4 | Toroidal | 37.961 | 47.706 | 253.040 | 39.594 | 7.745 | -3.307 |
| 5 | | 119.229 | -754.992 | 459.930 | 103.782 | 2.822 | -13.350 |

Example 5

Table 11

| Surface number | Coefficient of polynomial | | | | | | |
|---|---|---|---|---|---|---|---|
| 2 | C1 | 0.00000E+00 | C19 | 8.54316E-10 | C37 | 0.00000E+00 | C55 | 0.00000E+00 |
| | C2 | 7.43401E-02 | C20 | -3.00716E-08 | C38 | 0.00000E+00 | C56 | 0.00000E+00 |
| | C3 | 1.26031E-01 | C21 | 8.57783E-08 | C39 | 0.00000E+00 | C57 | 0.00000E+00 |
| | C4 | 6.47921 E-04 | C22 | -2.48786E-11 | C40 | 0.00000E+00 | C58 | 0.00000E+00 |
| | C5 | 4.33203E-05 | C23 | 6.08772E-11 | C41 | 0.00000E+00 | C59 | 0.00000E+00 |
| | C6 | -9.13686E-06 | C24 | -7.51368E-11 | C42 | 0.00000E+00 | C60 | 0.00000E+00 |
| | C7 | 2.70405E-06 | C25 | 2.77465E-11 | C43 | 0.00000E+00 | C61 | 0.00000E+00 |
| | C8 | -2.15690E-05 | C26 | -5.82084E-11 | C44 | 0.00000E+00 | C62 | 0.00000E+00 |
| | C9 | -1.00719E-05 | C27 | -3.76834E-10 | C45 | 0.00000E+00 | C63 | 0.00000E+00 |
| | C10 | 3.62560E-05 | C28 | 8.58741E-10 | C46 | 0.00000E+00 | C64 | 0.00000E+00 |
| | C11 | -1.28051 E-07 | C29 | 0.00000E+00 | C47 | 0.00000E+00 | C65 | 0.00000E+00 |
| | C12 | -7.41791 E-08 | C30 | 0.00000E+00 | C48 | 0.00000E+00 | C66 | 0.00000E+00 |
| | C13 | 1.95578E-07 | C31 | 0.00000E+00 | C49 | 0.00000E+00 | | |
| | C14 | -8.83249E-07 | C32 | 0.00000E+00 | C50 | 0.00000E+00 | | |
| | C15 | 3.04264E-06 | C33 | 0.00000E+00 | C51 | 0.00000E+00 | | |
| | C16 | -1.63944E-09 | C34 | 0.00000E+00 | C52 | 0.00000E+00 | | |
| | C17 | 5.02021E-09 | C35 | 0.00000E+00 | C53 | 0.00000E+00 | | |
| | C18 | 3.61341E-09 | C36 | 0.00000E+00 | C54 | 0.00000E+00 | | |
| 3 | C1 | 0.00000E+00 | C19 | 1.05313E-10 | C37 | 0.00000E+00 | C55 | 0.00000E+00 |
| | C2 | 7.52284E-02 | C20 | -4.81729E-11 | C38 | 0.00000E+00 | C56 | 0.00000E+00 |
| | C3 | -3.30535E-02 | C21 | 2.49310E-10 | C39 | 0.00000E+00 | C57 | 0.00000E+00 |
| | C4 | 8.44337E-04 | C22 | -1.70460E-13 | C40 | 0.00000E+00 | C58 | 0.00000E+00 |
| | C5 | 6.09928E-05 | C23 | -8.10118E-14 | C41 | 0.00000E+00 | C59 | 0.00000E+00 |
| | C6 | 4.14469E-04 | C24 | -2.61025E-13 | C42 | 0.00000E+00 | C60 | 0.00000E+00 |
| | C7 | 7.24104E-07 | C25 | -2.44547E-13 | C43 | 0.00000E+00 | C61 | 0.00000E+00 |
| | C8 | -1.80204E-06 | C26 | 8.29562E-13 | C44 | 0.00000E+00 | C62 | 0.00000E+00 |
| | C9 | 3.80002E-07 | C27 | -2.79408E-13 | C45 | 0.00000E+00 | C63 | 0.00000E+00 |
| | C10 | -6.31093E-07 | C28 | 9.61641E-13 | C46 | 0.00000E+00 | C64 | 0.00000E+00 |
| | C11 | 1.57841E-09 | C29 | 0.00000E+00 | C47 | 0.00000E+00 | C65 | 0.00000E+00 |
| | C12 | -3.45145E-09 | C30 | 0.00000E+00 | C48 | 0.00000E+00 | C66 | 0.00000E+00 |
| | C13 | 7.12120E-09 | C31 | 0.00000E+00 | C49 | 0.00000E+00 | | |
| | C14 | -4.93262E-09 | C32 | 0.00000E+00 | C50 | 0.00000E+00 | | |
| | C15 | 2.35792E-08 | C33 | 0.00000E+00 | C51 | 0.00000E+00 | | |
| | C16 | -1.54142E-11 | C34 | 0.00000E+00 | C52 | 0.00000E+00 | | |
| | C17 | -3.73411 E-11 | C35 | 0.00000E+00 | C53 | 0.00000E+00 | | |
| | C18 | -3.24326E-11 | C36 | 0.00000E+00 | C54 | 0.00000E+00 | | |

Table 12

| Surface number | Shape | Eccentricity data | | | | | |
|---|---|---|---|---|---|---|---|
| | | X | Y | Z | ADE | BDE | CDE |
| 1 | | 0 | 0 | 0 | 0 | 0 | 0 |
| 2 | Free curved surface | 3.163 | 19.185 | 38.804 | -30.903 | -2.266 | -3.512 |
| 3 | Free curved surface | 6.486 | 129.959 | 34.777 | -62.496 | -0.087 | -4.178 |
| 4 | Toroidal | 1.181 | 32.392 | 161.303 | 26.936 | -5.181 | -5.854 |
| 5 | | -168.219 | -775.561 | 126.260 | 85.317 | -12.157 | 8.390 |

Example 6

Table 13

| Surface number | Coefficient of polynomial | | | | | | |
|---|---|---|---|---|---|---|---|
| | C1 | 5.31393E+00 | C19 | 4.18832E-08 | C37 | -6.59034E-15 | C55 | 0.00000E+00 |
| | C2 | 6.14628E-02 | C20 | -1.57336E-07 | C38 | -3.14026E-14 | C56 | 0.00000E+00 |
| | C3 | 4.64893E-01 | C21 | 2.09544E-07 | C39 | -1.17757E-14 | C57 | 0.00000E+00 |
| | C4 | 1.79720E-03 | C22 | -4.57278E-10 | C40 | -1.12045E-13 | C58 | 0.00000E+00 |
| | C5 | 1.12476E-04 | C23 | -9.57855E-10 | C41 | -3.18189E-13 | C59 | 0.00000E+00 |
| | C6 | -4.01159E-04 | C24 | 2.75575E-10 | C42 | 1.10232E-13 | C60 | 0.00000E+00 |
| | C7 | 3.25630E-05 | C25 | 1.64775E-09 | C43 | 4.23078E-13 | C61 | 0.00000E+00 |
| | C8 | 4.60919E-06 | C26 | 6.44462E-11 | C44 | 1.00736E-12 | C62 | 0.00000E+00 |
| | C9 | -6.03291E-05 | C27 | -4.46906E-10 | C45 | -9.14181E-13 | C63 | 0.00000E+00 |
| 2 | C10 | -3.58176E-05 | C28 | 2.14478E-09 | C46 | 0.00000E+00 | C64 | 0.00000E+00 |
| | C11 | -3.92909E-07 | C29 | -3.42160E-12 | C47 | 0.00000E+00 | C65 | 0.00000E+00 |
| | C12 | 7.98664E-07 | C30 | -1.09891E-11 | C48 | 0.00000E+00 | C66 | 0.00000E+00 |
| | C13 | 1.72870E-06 | C31 | -4.89577E-12 | C49 | 0.00000E+00 | | |
| | C14 | -5.87419E-06 | C32 | -3.37324E-12 | C50 | 0.00000E+00 | | |
| | C15 | 3.61494E-06 | C33 | 1.53945E-12 | C51 | 0.00000E+00 | | |
| | C16 | -2.52222E-08 | C34 | 1.01476E-11 | C52 | 0.00000E+00 | | |
| | C17 | -1.72663E-08 | C35 | 6.54663E-11 | C53 | 0.00000E+00 | | |
| | C18 | 7.33649E-08 | C36 | -5.37173E-11 | C54 | 0.00000E+00 | | |

(continued)

| Surface number | Coefficient of polynomial | | | | | | | |
|---|---|---|---|---|---|---|---|---|
| | C1 | 0.00000E+00 | C19 | 1.17932E-10 | C37 | 8.18620E-18 | C55 | 0.00000E+00 |
| | C2 | 2.08429E-02 | C20 | 2.38981E-10 | C38 | -6.90889E-18 | C56 | 0.00000E+00 |
| | C3 | 1.26733E-01 | C21 | 1.05279E-09 | C39 | 4.21005E-18 | C57 | 0.00000E+00 |
| | C4 | 1.60031E-03 | C22 | 8.16294E-14 | C40 | -4.25062E-17 | C58 | 0.00000E+00 |
| | C5 | -7.79659E-05 | C23 | -4.87975E-13 | C41 | 1.97423E-16 | C59 | 0.00000E+00 |
| | C6 | 1.12460E-03 | C24 | -7.68740E-13 | C42 | 2.62493E-17 | C60 | 0.00000E+00 |
| | C7 | 9.69798E-07 | C25 | 3.10216E-13 | C43 | 7.93750E-16 | C61 | 0.00000E+00 |
| | C8 | -9.17625E-07 | C26 | -1.27347E-12 | C44 | 1.57455E-16 | C62 | 0.00000E+00 |
| | C9 | 1.62879E-06 | C27 | -3.78998E-12 | C45 | 1.15341 E-15 | C63 | 0.00000E+00 |
| 3 | C10 | 3.34641 E-07 | C28 | -8.27569E-12 | C46 | 0.00000E+00 | C64 | 0.00000E+00 |
| | C11 | 1.67478E-09 | C29 | 2.09554E-15 | C47 | 0.00000E+00 | C65 | 0.00000E+00 |
| | C12 | 1.62408E-09 | C30 | -2.43596E-15 | C48 | 0.00000E+00 | C66 | 0.00000E+00 |
| | C13 | -1.95545E-09 | C31 | 2.48185E-15 | C49 | 0.00000E+00 | | |
| | C14 | -1.00740E-08 | C32 | -1.04840E-14 | C50 | 0.00000E+00 | | |
| | C15 | -3.43339E-08 | C33 | 1.81644E-14 | C51 | 0.00000E+00 | | |
| | C16 | -8.78711E-12 | C34 | -4.60001 E-14 | C52 | 0.00000E+00 | | |
| | C17 | -2.95545E-11 | C35 | 6.00041 E-15 | C53 | 0.00000E+00 | | |
| | C18 | -1.72777E-10 | C36 | -1.03430E-13 | C54 | 0.00000E+00 | | |

Table 14

| Surface number | Shape | Eccentricity data | | | | | |
|---|---|---|---|---|---|---|---|
| | | X | Y | Z | ADE | BDE | CDE |
| 1 | | 0 | 0 | 0 | 0 | 0 | 0 |
| 2 | Free curved surface | 7.045 | 22.397 | 30.974 | 1.945 | -13.108 | 0.890 |
| 3 | Free curved surface | -10.138 | 67.640 | -41.130 | -21.652 | -12.395 | -4.389 |
| 4 | Toroidal | -28.813 | 29.813 | 232.960 | 57.727 | -10.200 | 8.929 |
| 5 | | -17.199 | -635.508 | 674.614 | 123.092 | 0.655 | 20.204 |

Example 7

Table 15

| Surface number | X curvature | Y curvature |
|---|---|---|
| 2 | 603.2021 | 2654.4 |

Table 16

| Surface number | Coefficient of polynomial | | | | | | | |
|---|---|---|---|---|---|---|---|---|
| 3 | C1 | 0.00000E+00 | C19 | 4.87235E-12 | C37 | 0.00000E+00 | C55 | 0.00000E+00 |
| | C2 | -3.53809E-02 | C20 | -1.22754E-10 | C38 | 0.00000E+00 | C56 | 0.00000E+00 |
| | C3 | 1.28613E-02 | C21 | 3.76537E-10 | C39 | 0.00000E+00 | C57 | 0.00000E+00 |
| | C4 | 6.92444E-04 | C22 | -2.41643E-14 | C40 | 0.00000E+00 | C58 | 0.00000E+00 |
| | C5 | 5.21278E-06 | C23 | 5.70609E-14 | C41 | 0.00000E+00 | C59 | 0.00000E+00 |
| | C6 | 2.72060E-04 | C24 | -1.55312E-13 | C42 | 0.00000E+00 | C60 | 0.00000E+00 |
| | C7 | -3.35289E-07 | C25 | 5.63778E-13 | C43 | 0.00000E+00 | C61 | 0.00000E+00 |
| | C8 | -2.38015E-07 | C26 | -1.72194E-12 | C44 | 0.00000E+00 | C62 | 0.00000E+00 |
| | C9 | -1.86100E-07 | C27 | 3.64513E-12 | C45 | 0.00000E+00 | C63 | 0.00000E+00 |
| | C10 | -1.06353E-06 | C28 | -6.10356E-12 | C46 | 0.00000E+00 | C64 | 0.00000E+00 |
| | C11 | 2.39274E-09 | C29 | 0.00000E+00 | C47 | 0.00000E+00 | C65 | 0.00000E+00 |
| | C12 | -1.23325E-10 | C30 | 0.00000E+00 | C48 | 0.00000E+00 | C66 | 0.00000E+00 |
| | C13 | 5.27888E-09 | C31 | 0.00000E+00 | C49 | 0.00000E+00 | | |
| | C14 | -7.12437E-09 | C32 | 0.00000E+00 | C50 | 0.00000E+00 | | |
| | C15 | 1.34163E-08 | C33 | 0.00000E+00 | C51 | 0.00000E+00 | | |
| | C16 | 9.51762E-13 | C34 | 0.00000E+00 | C52 | 0.00000E+00 | | |
| | C17 | -1.48362E-11 | C35 | 0.00000E+00 | C53 | 0.00000E+00 | | |
| | C18 | 9.29390E-12 | C36 | 0.00000E+00 | C54 | 0.00000E+00 | | |

Table 17

| Surface number | Shape | Eccentricity data | | | | | |
|---|---|---|---|---|---|---|---|
| | | X | Y | Z | ADE | BDE | CDE |
| 1 | | 0 | 0 | 0 | 0 | 0 | 0 |
| 2 | Toroidal | -1.836 | 2.033 | 48.083 | -30.835 | 2.234 | 0.577 |
| 3 | Free curved surface | 1.602 | 116.142 | -7.383 | -41.903 | 2.082 | 0.995 |
| 4 | Toroidal | 12.044 | 5.809 | 256.018 | 43.684 | 5.817 | 2.521 |
| 5 | | 203.349 | -755.414 | 511.993 | 109.093 | 6.642 | -8.320 |

Example 8

Table 18

| Surface number | Coefficient of polynomial | | | | | | |
|---|---|---|---|---|---|---|---|
| 2 | C1 | 0.00000E+00 | C19 | -3.35093E-08 | C37 | 4.64867E-13 | C55 | 0.00000E+00 |
| | C2 | -6.57571 E-02 | C20 | -4.47809E-08 | C38 | 2.62063E-13 | C56 | 0.00000E+00 |
| | C3 | -4.62022E-03 | C21 | 3.65465E-08 | C39 | -2.32728E-13 | C57 | 0.00000E+00 |
| | C4 | 4.20899E-04 | C22 | -7.12345E-10 | C40 | -1.72566E-12 | C58 | 0.00000E+00 |
| | C5 | 3.31024E-04 | C23 | -7.68166E-10 | C41 | -1.30769E-12 | C59 | 0.00000E+00 |
| | C6 | -2.15702E-03 | C24 | 3.18443E-10 | C42 | 1.36316E-13 | C60 | 0.00000E+00 |
| | C7 | 3.14987E-05 | C25 | 1.59290E-09 | C43 | -3.87410E-12 | C61 | 0.00000E+00 |
| | C8 | -1.70716E-05 | C26 | 2.88191 E-09 | C44 | -5.36870E-12 | C62 | 0.00000E+00 |
| | C9 | 1.38602E-05 | C27 | 2.36459E-09 | C45 | 3.92007E-12 | C63 | 0.00000E+00 |
| | C10 | 1.66481E-05 | C28 | -1.48624E-09 | C46 | 0.00000E+00 | C64 | 0.00000E+00 |
| | C11 | 5.55736E-08 | C29 | 1.11929E-11 | C47 | 0.00000E+00 | C65 | 0.00000E+00 |
| | C12 | -6.23406E-08 | C30 | -7.08850E-12 | C48 | 0.00000E+00 | C66 | 0.00000E+00 |
| | C13 | -4.48689E-07 | C31 | 3.58639E-11 | C49 | 0.00000E+00 | | |
| | C14 | -8.94241 E-07 | C32 | 3.21771E-11 | C50 | 0.00000E+00 | | |
| | C15 | -6.91527E-07 | C33 | 1.22466E-11 | C51 | 0.00000E+00 | | |
| | C16 | -2.06883E-08 | C34 | 6.76941 E-11 | C52 | 0.00000E+00 | | |
| | C17 | 7.39764E-09 | C35 | 9.53552E-11 | C53 | 0.00000E+00 | | |
| | C18 | -1.73937E-08 | C36 | -8.49188E-11 | C54 | 0.00000E+00 | | |
| 3 | C1 | 0.00000E+00 | C19 | 7.36894E-11 | C37 | 0.00000E+00 | C55 | 0.00000E+00 |
| | C2 | 1.05136E-01 | C20 | -1.83107E-10 | C38 | 0.00000E+00 | C56 | 0.00000E+00 |
| | C3 | -9.03206E-03 | C21 | -5.31482E-10 | C39 | 0.00000E+00 | C57 | 0.00000E+00 |
| | C4 | 3.19326E-03 | C22 | -8.61567E-14 | C40 | 0.00000E+00 | C58 | 0.00000E+00 |
| | C5 | 3.35742E-05 | C23 | -2.91138E-13 | C41 | 0.00000E+00 | C59 | 0.00000E+00 |
| | C6 | 2.55373E-03 | C24 | -3.14511 E-13 | C42 | 0.00000E+00 | C60 | 0.00000E+00 |
| | C7 | 1.46521E-06 | C25 | -4.12771E-13 | C43 | 0.00000E+00 | C61 | 0.00000E+00 |
| | C8 | -1.06354E-06 | C26 | -6.36879E-12 | C44 | 0.00000E+00 | C62 | 0.00000E+00 |
| | C9 | 1.19716E-06 | C27 | -2.56930E-11 | C45 | 0.00000E+00 | C63 | 0.00000E+00 |
| | C10 | -3.22353E-07 | C28 | -3.20213E-11 | C46 | 0.00000E+00 | C64 | 0.00000E+00 |
| | C11 | 8.49822E-09 | C29 | 0.00000E+00 | C47 | 0.00000E+00 | C65 | 0.00000E+00 |
| | C12 | -1.76954E-09 | C30 | 0.00000E+00 | C48 | 0.00000E+00 | C66 | 0.00000E+00 |
| | C13 | 1.83426E-08 | C31 | 0.00000E+00 | C49 | 0.00000E+00 | | |
| | C14 | 2.01842E-08 | C32 | 0.00000E+00 | C50 | 0.00000E+00 | | |
| | C15 | 4.03481E-08 | C33 | 0.00000E+00 | C51 | 0.00000E+00 | | |
| | C16 | -9.97452E-12 | C34 | 0.00000E+00 | C52 | 0.00000E+00 | | |
| | C17 | -4.38612E-11 | C35 | 0.00000E+00 | C53 | 0.00000E+00 | | |
| | C18 | -2.75237E-11 | C36 | 0.00000E+00 | C54 | 0.00000E+00 | | |

Table 19

| Surface number | Shape | Eccentricity data | | | | | |
|---|---|---|---|---|---|---|---|
| | | X | Y | Z | ADE | BDE | CDE |
| 1 | | 0 | 0 | 0 | 0 | 0 | 0 |
| 2 | Free curved surface | -0.477 | 4.508 | 19.660 | -36.499 | 3.118 | -0.887 |
| 3 | Free curved surface | 5.643 | 130.971 | 6.704 | -59.994 | 3.213 | 0.429 |
| 4 | Toroidal | -101.437 | 2.506 | 198.814 | 30.423 | -6.255 | -15.582 |
| 5 | | -359.723 | -706.261 | 310.727 | 105.859 | -18.828 | 9.605 |

In the above Examples 1 to 6, Table 20 shows examples of the display size of the image, the virtual image size, and the distance from the viewpoint of a user to the virtual image. In addition, Table 21 shows examples of the numerical values calculated, with reference to FIG. 7, based on the parameters: D12 indicating the distance between first mirror 13 and second mirror 14; Lv indicating the vertical length ($T \times \tan\theta$) of virtual image 40; and T indicating the distance from the pupil of user 30 to virtual image 40.

Table 20

| | | Example 1 | Example 2 | Example 3 | Example 4 | Example 5 | Example 6 |
|---|---|---|---|---|---|---|---|
| Display size | X | 97.6 | 97.6 | 100.0 | 100.0 | 40.9 | 14.4 |
| | Y | 36.6 | 36.6 | 50.0 | 50.0 | 20.5 | 38.4 |
| Virtual image size | X | 420.0 | 420.0 | 540.0 | 540.0 | 252.0 | 300.0 |
| | Y | 157.5 | 157.5 | 270.0 | 270.0 | 126.0 | 112.5 |
| Pupil-virtual image distance | | 2100 | 2100 | 2700 | 2700 | 2100 | 2500 |

Table 21

| | Example 1 | Example 2 | Example 3 | Example 4 | Example 5 | Example 6 |
|---|---|---|---|---|---|---|
| D12/Lv | 0.84 | 0.86 | 0.61 | 0.61 | 0.89 | 0.90 |
| $\sqrt{(T \times Lv)}/Yv$ | 0.10 | 0.10 | 0.05 | 0.05 | 0.16 | 0.20 |

INDUSTRIAL APPLICABILITY

The present technique is preferably applied to a display apparatus such as a head-up display for in-car use which requires high image quality.

REFERENCE MARKS IN THE DRAWINGS

10: Display unit
20: Vehicle
21: Dashboard
22: Windshield
30: User
31: Eye box
40: Virtual image
11: Housing
11A: Opening
11B: First edge
11C: Second edge

11D:        First light shielding part
11E:        Second light shielding part
12:         Display device
12A:        Display area
12B:        Non-display area
13:         First mirror
13A:        Reflection surface
14:         Second mirror
14A:        Reflection surface
15:         Display controller
16:         Image
16A, 16B:   Display position

**Claims**

1. A display apparatus comprising a display unit configured to project an image onto a light transmissive display member to form a virtual image of the image projected by the display unit, on an opposite side of the display member to a user, wherein

the display unit includes a display device configured to display an image, and a projection optical system configured to project the image displayed on the display device onto the display member,

the projection optical system includes, on an optical path from the display device to the display member, a first reflection member disposed on a display device side, and a second reflection member disposed on a display member side,

the first reflection member has a reflection surface which reflects the image displayed on the display device and has a convex shape,

the second reflection member has a reflection surface which projects the image onto the display member and has a free curved concave shape, and

a relationship between a vertical length Yv of the image displayed on the display device and a distance T, on a central optical path, from the user to the virtual image satisfies $0.03 < \sqrt{(T \times Lv)}/Yv < 0.22$, where Lv is a vertical length of the virtual image of the image.

2. The display apparatus according to claim 1, wherein, in the display unit, an distance D12 between the first reflection member and the second reflection member and an distance DL1 between the first reflection member and the image on the display device satisfy $3.0 < D12/DL1$.

3. The display apparatus according to claim 1, wherein the reflection surface of the first reflection member has a rotationally asymmetric convex shape.

4. A display unit which projects an image onto a light transmissive display member to form a virtual image of the image, the display unit comprising:

   a housing having an opening through which projection light is emitted;
   a display device housed in the housing and configured to display an image; and
   a projection optical system housed in the housing and configured to project the image displayed on the display device onto the display member,
   wherein
   the projection optical system includes, on an optical path from the display device to the opening, a first reflection member disposed on a display device side, and a second reflection member disposed on an opening side,
   the first reflection member has a reflection surface which reflects the image displayed on the display device and has a convex shape,
   the second reflection member has a reflection surface which projects the image onto the display member and has a free curved concave shape, and
   a relationship between a vertical length Yv of the image displayed on the display device and a distance T, on a central optical path, from the user to the virtual image satisfies $0.03 < \sqrt{(T \times Lv)}/Yv < 0.22$, where Lv is a vertical length of the virtual image of the image.

5. The display unit according to claim 4, wherein an distance D12 between the first reflection member and the second reflection member and an distance DL1 between the first reflection member and the image on the display device satisfy 3.0 < D12/DL1.

6. The display unit according to claim 4, wherein the reflection surface of the first reflection member has a rotationally asymmetric convex shape.

# FIG. 1

# FIG. 2

# FIG. 3

# FIG. 4

# FIG. 5

# FIG. 6

# FIG. 7

# FIG. 8

# FIG. 9

# FIG. 10

# FIG. 11

# FIG. 12

# FIG. 13

## INTERNATIONAL SEARCH REPORT

| | International application No. |
| --- | --- |
| | PCT/JP2014/006366 |

**A. CLASSIFICATION OF SUBJECT MATTER**
*G02B27/01*(2006.01)i, *B60K35/00*(2006.01)i, *G03B35/18*(2006.01)i, *H04N5/64*
(2006.01)i

According to International Patent Classification (IPC) or to both national classification and IPC

**B. FIELDS SEARCHED**

Minimum documentation searched (classification system followed by classification symbols)
G02B27/01, B60K35/00, G03B35/18, H04N5/64

Documentation searched other than minimum documentation to the extent that such documents are included in the fields searched
Jitsuyo Shinan Koho        1922–1996   Jitsuyo Shinan Toroku Koho   1996–2015
Kokai Jitsuyo Shinan Koho  1971–2015   Toroku Jitsuyo Shinan Koho   1994–2015

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
| --- | --- | --- |
| Y<br>A | JP 2013-61554 A (Ricoh Co., Ltd.),<br>04 April 2013 (04.04.2013),<br>paragraphs [0004] to [0006], [0010] to [0011],<br>[0036] to [0042], [0064] to [0070]; fig. 1, 9<br>& US 2013/63754 A1      & EP 2570843 A1 | 1,3-4,6<br>2,5 |
| Y<br>A | JP 2011-209616 A (Denso Corp.),<br>20 October 2011 (20.10.2011),<br>paragraphs [0027], [0037] to [0043]; fig. 2, 6<br>(Family: none) | 1,3-4,6<br>2,5 |
| Y<br>A | JP 2013-111999 A (Nippon Seiki Co., Ltd.),<br>10 June 2013 (10.06.2013),<br>paragraphs [0015] to [0018]; fig. 1<br>(Family: none) | 1,3-4,6<br>2,5 |

☐ Further documents are listed in the continuation of Box C.          ☐ See patent family annex.

| | |
| --- | --- |
| \* Special categories of cited documents:<br>"A" document defining the general state of the art which is not considered to be of particular relevance<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search<br>04 March 2015 (04.03.15) | Date of mailing of the international search report<br>17 March 2015 (17.03.15) |
| --- | --- |
| Name and mailing address of the ISA/<br>Japan Patent Office<br>3-4-3,Kasumigaseki,Chiyoda-ku,<br>Tokyo 100-8915,Japan | Authorized officer<br><br>Telephone No. |

Form PCT/ISA/210 (second sheet) (July 2009)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2013025205 A
- JP 2013111999 A